(19) Europäisches Patentamt
European Patent Office
Office européen des brevets

(11) EP 2 545 011 B1

(12) FASCICULE DE BREVET EUROPEEN

(45) Date de publication et mention de la délivrance du brevet:
**25.08.2021 Bulletin 2021/34**

(21) Numéro de dépôt: **11707411.2**

(22) Date de dépôt: **09.03.2011**

(51) Int Cl.:
**C03C 17/34** (2006.01)    **C03C 17/245** (2006.01)

(86) Numéro de dépôt international:
**PCT/EP2011/053517**

(87) Numéro de publication internationale:
**WO 2011/110581 (15.09.2011 Gazette 2011/37)**

(54) **VITRAGE A REFLEXION ELEVEE**

GLASPLATTE MIT HOHER REFLEXION

HIGH-REFLECTION GLASS PANEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.03.2010 BE 201000156**

(43) Date de publication de la demande:
**16.01.2013 Bulletin 2013/03**

(73) Titulaire: **AGC Glass Europe**
**1348 Louvain-la-Neuve (BE)**

(72) Inventeurs:
• **DUSOULIER, Laurent**
**B-6040 Jumet (BE)**
• **COSTER, Dominique**
**B-6040 Jumet (BE)**

(74) Mandataire: **AGC Glass Europe**
**Technovation Centre**
**Intellectual Property Department**
**Rue Louis Blériot 12**
**6041 Gosselies (BE)**

(56) Documents cités:
**EP-A1- 2 314 553      EP-A2- 0 911 302**
**WO-A1-2008/010883     WO-A1-2008/123553**
**WO-A1-2010/031808     WO-A2-2011/006883**
**US-A1- 2003 224 181   US-A1- 2006 159 933**
**US-A1- 2008 028 984**

**Description**

La présente invention concerne des vitrages qui présentent une réflexion élevée dans le domaine visible tout en conservant une part significative de transmission.

Les vitrages en question sont utiles notamment pour limiter l'apport énergétique naturel notamment dans les bâtiments exposés à un ensoleillement important. La limitation de l'apport énergétique permet d'économiser le recours à la climatisation. Les vitrages en question sont aussi caractérisé par leur « facteur solaire » grandeur désignant le rapport de l'énergie à la fois transmise à travers le vitrage et réémise par celui-ci vers l'intérieur, après absorption, à l'énergie totale incidente.

Des vitrages de ce type sont le plus souvent constitués en revêtant la feuille de verre d'une couche, ou d'un système de couches dites « dures ». Ces couches sont traditionnellement déposées par pyrolyse sur le verre chaud immédiatement après formation de la feuille. Le plus usuel est de procéder à la pyrolyse « en ligne » c'est-à-dire sur le site même de production du verre. Le ruban de verre constitué sur la ligne « float » est revêtu alors qu'il est encore à haute température.

Une particularité reconnue des produits obtenus par pyrolyse, est qu'ils sont relativement durs. Ils résistent bien à la fois aux agressions chimiques et mécaniques. Pour cette raison ils sont commodément utilisés, éventuellement en exposant la face revêtue aux aléas externes. Cette particularité distingue les couches obtenues par pyrolyse de celles produites par les techniques de dépôts sous vide par pulvérisation cathodique, ces deux types de techniques constituent les deux voies les plus largement utilisées pour la production de couches minces sur un support verrier.

Par opposition les couches obtenues par pulvérisation cathodique sous vide sont dites « tendres ». Leur résistance mécanique ou chimique insuffisante fait que ces couches sont essentiellement utilisées dans des configurations où elles ne sont pas exposées à ces agressions. C'est le cas dans les vitrages multiples. Dans ces vitrages les couches sont tournées vers les espaces situés entre les feuilles. US2006/0159933 décrit ces couches pour vitrages multiples.

Si l'utilisation de couches pyrolytiques est techniquement satisfaisante, elle est cependant liée étroitement à la disponibilité de précurseurs spécifiques adaptés. Les précurseurs disponibles ne permettent pas de produire l'ensemble des couches accessibles. Plus encore la mise en œuvre des techniques de pyrolyse impose la présence d'installations spécifiques très lourdes qui doivent s'intégrer aux lignes de production lesquelles, par nature et par souci d'économie d'échelle, sont nécessairement en nombre limité et donc géographiquement distribuées de manière discrète sur les territoires auxquels ces produits sont destinés.

Les installations de revêtement par pulvérisation cathodique sous vide sont indépendantes de celle de fabrication du verre. Les opérations de revêtement par ces techniques sont conduites "en reprise" selon la terminologie usuelle, autrement dit sur du verre qui a été fabriqué antérieurement et qui entre temps peut avoir été stocké, transporté, redécoupé etc.

Pour des raisons de logistiques notamment, la possibilité de fournir des vitrages revêtus par pulvérisation cathodique offrant les qualités des produits obtenus par pyrolyse est un but de l'invention. Il est nécessaire bien évidemment que le coût de production de ces vitrages reste comparable à celui des vitrages revêtus par pyrolyse.

Des couches déposées par pulvérisation cathodique sous vide et qui conduisent à des facteurs solaires intéressants sont connues. C'est en particulier le cas de couches d'oxyde de titane. Ces couches montrent cependant, comme indiqué précédemment, une résistance mécanique insuffisante pour pouvoir être utilisées hors des faces non exposées des vitrages considérés.

Les inventeurs ont montré qu'un choix bien spécifique des matériaux constituant ces couches déposées par pulvérisation cathodique permettait d'atteindre les exigences de résistance indiquées.

Les inventeurs ont aussi montré que par un choix approprié des couches ou systèmes de couches produits, il est possible également de soumettre les vitrages en question à des traitements thermiques ultérieurs vigoureux, tels que des traitements de bombage ou de trempe sans pour autant altérer les caractéristiques essentielles conférées par ces couches.

Les couches ou systèmes de couches, considérés selon l'invention ne contiennent pas de couche de type métallique réfléchissant les infrarouges, notamment de couches à base d'argent, les systèmes comportant ces couches à base d'argent montrant systématiquement une fragilité certaine aux agressions extérieures.

Le but de l'invention est de fournir des vitrages répondant aux exigences énoncées ci-dessus.

Les inventeurs ont montré que ce but pouvait être atteint par des vitrages tels que définis à la revendication 1. Il est remarquable que les couches choisies et produites par dépôt cathodique permettent d'atteindre les caractéristiques recherchées notamment de résistance telles qu'elles puissent remplacer avantageusement certaines couches déposées par pyrolyse.

Les oxydes considérés de tantale, niobium et zirconium, ou les oxydes mixtes de ces métaux, sont tels qu'obtenus par pulvérisation cathodique, que les cathodes soient céramiques ou métalliques, dans des conditions telles que les couches formées ne présentent pas un coefficient d'absorption k supérieur à 0,01.

Des couches réfléchissantes préférées sont des couches d'oxyde de niobium ou, éventuellement des couches d'oxyde mixte de niobium et de zirconium dont le rapport atomique Zr/Nb est de 25 à 75%.

La résistance mécanique et chimique de la couche réfléchissante dépend de sa composition, elle dépend aussi de son épaisseur. Si une augmentation d'épaisseur s'accompagne d'une résistance accrue, au-delà d'un certain seuil l'amélioration n'est pas significative, le coût supplémentaire pour un dépôt plus épais devient inutile.

De préférence la couche réfléchissante selon l'invention présente une épaisseur comprise entre 200 et 700Å, et avantageusement de 250 à 500Å.

Le choix de l'épaisseur de la couche réfléchissante dépend aussi de la présence d'autres couches, mais aussi des propriétés recherchées en termes de réflexion, transmission et absorption de la lumière incidente. Pour les vitrages selon l'invention, la réflexion qui de façon générale est d'au moins 20% lorsque la couche ou le système de couches est appliqué sur du verre clair de 4mm d'épaisseur, est avantageusement dans les même conditions comprise entre 20 et 40%.

Les caractéristiques de la couche réfléchissante, ou de système de couches dans lequel elle est incluse, en particulier son indice, déterminent la réflexion obtenue mais aussi les autres grandeurs optiques, notamment la transmission lumineuse. Pour les vitrages selon l'invention la transmission lumineuse étant d'au moins 60%, la lumière absorbée par le vitrage reste relativement peu élevée. Elle est avantageusement inférieure à 20% et de préférence inférieure à 10%.

Dans les vitrages selon l'invention la couche réfléchissante à base d'oxyde de niobium de tantale, de zirconium ou d'oxyde mixte de plusieurs de ces métaux peut être associée à d'autres couches pour en améliorer les propriétés ou conférer des propriétés que seule elle ne présenterait pas, ou pas à un degré approprié à l'utilisation envisagée.

La protection conférée par la couche réfléchissante selon l'invention n'implique pas nécessairement que la réflexion provienne exclusivement de cette couche. Une fois la résistance nécessaire obtenue, le système de couche peut inclure d'autres couches notamment pour contribuer à la réflexion. Dans cette perspective une couche à forte réflexion et donc à fort indice peut être associée. Ces couches présentent alors un indice de réfraction supérieur à 2,2. Des couches à fort indice particulièrement préférées sont les couches d'oxyde de titane stoechiométriques ou non (TXO, couches qui peuvent être obtenues notamment en utilisant des cathodes céramiques), ou encore les couches d'oxynitrure de titane renfermant une faible proportion d'azote (N/O atomique inférieur à 10%). Ces couches ont un indice de l'ordre de 2,45-2,50. La combinaison d'une couche de ce type avec une couche réfléchissante selon l'invention, permet donc le cas échéant de bénéficier simultanément d'une bonne résistance conférée par cette dernière couche, et globalement d'un indice plus élevé.

De manière analogue la couche réfléchissante est aussi associée à une couche présentant une résistance mécanique et/ou chimique particulièrement élevée et qui présente aussi des propriétés réfléchissantes. Cette couche, nécessairement superficielle, peut être relativement peu épaisse la majeure partie de la réflexion étant assurée par une couche située sous cette couche de protection externe. En pratique cette couche peut être d'une épaisseur de quelques dizaines d'Angströms. 50Å ou moins peuvent suffire. Bien entendu la couche en question peut être plus épaisse, mais dans ce cas son rôle dans l'établissement de la réflexion est significativement plus important. Dans le rôle principal de couche de protection, l'épaisseur ne dépasse pas ordinairement 100Å. Un matériau satisfaisant à ces conditions est un oxyde mixte de titane et d'un des métaux énumérés pour la constitution des oxydes réfléchissant selon l'invention. L'oxyde de titane seul, comme rappelé précédemment, n'offre pas les qualités notamment mécaniques adéquates. En association avec les métaux en question sa structure est modifiée et ses propriétés également. L'association notamment de titane et de zirconium conduit à des couches très résistantes. Des oxydes mixtes préférés de se type sont constitués notamment pour des proportions pondérale sensiblement égales d'oxyde de zirconium (46%) et d'oxyde de titane (50%).

La mise en œuvre des vitrages selon l'invention peut intervenir sans autre modification que la mise aux dimensions souhaitées et l'introduction dans des châssis. Les vitrages en question dans ce cas sont essentiellement plans. La nécessité de la mise aux dimensions après le revêtement, fait que les feuilles de verre entrant dans la composition de ces vitrages ne sont pas soumises préalablement à un traitement thermique. Les traitements thermiques en question en assurant la présence de contraintes, confèrent aux vitrages des propriétés mécaniques assurant à la fois une meilleure résistance au choc et surtout, en cas de choc violent, font que ces vitrages se brisent en multiples fragments de petites dimensions.

Lorsque que l'on souhaite disposer de vitrages soit incurvés soit trempés, il est nécessaire de passer par un traitement thermique à température élevée postérieurement à l'application des couches. Ces traitements conduisent les vitrages à des températures qui dépassent 550°C et souvent 600°C, et ceci pendant un temps plus ou moins long. Dans le cas de l'incurvation ou du bombage, la transformation peut ainsi nécessiter de maintenir ces températures pendant plusieurs minutes compte tenu notamment de l'inertie thermique du verre. Le temps de maintien à ces températures peut atteindre 5 minutes ou plus selon les techniques mises en œuvre et l'épaisseur des feuilles traitées.

Les traitements thermiques de type trempe ou bombage sont connus pour être susceptibles d'altérer les couches minces déposées sur les feuilles de verre. Indépendamment des altérations qui peuvent apparaître dans la structure de certaines couches en raison même de la température, le substrat verrier peut aussi induire des modifications indésirables.

Les feuilles de verre de type silico-sodo-calcique, autrement dit les verres les plus usuels, soumises à des températures élevées peuvent conduire à une altération des couches dont elles sont revêtues. Aux températures considérées notamment les constituants alcalins de ces verres sont susceptibles de migrer et de diffuser dans les couches au contact du verre. La diffusion de ces éléments mobiles entraîne souvent l'apparition d'un voile ("haze") plus ou moins prononcé.

L'apparition du voile correspond à un mécanisme de diffusion lumineuse dû à la présence des éléments étrangers à la structure de la couche.

En pratique les produits utilisés doivent être bien transparents. La proportion de lumière diffusée par rapport à la lumière transmise ne doit pas excéder 2% et de préférence pas 1%. Ces limites peuvent être dépassées si aucune précaution n'est prise pour protéger les couches selon l'invention.

Pour prévenir les phénomènes de diffusion, notamment celle des ions alcalins du verre, il est connu de disposer des couches qui s'opposent au passage de ces ions, couches qui sont interposées entre le substrat et la couche à protéger. Des couches de protection de ce type sont notamment les couches de $SiO_2$. Si leur qualité de barrière est bien connue, leur production par pulvérisation cathodique reste relativement coûteuse. Dans la mesure où il est souhaitable de procéder au dépôt de l'ensemble des couches de la même manière et dans un seul passage, il peut être préférable de substituer aux couches de silice des couches présentant des propriétés analogues mais plus faciles à réaliser.

Selon l'invention, comme couche faisant obstacle à la diffusion des constituants du substrat dans la couche réfléchissante, il est proposé d'utiliser soit une couche de $SiO_2$, soit au moins une couche à base d'oxyde d'étain soit encore une couche de nitrure de silicium ou d'oxy-nitrure de silicium.

Lorsqu'on utilise une couche à base d'oxyde d'étain elle comprend au moins 30% et de préférence au moins 40% en poids d'oxyde d'étain.

La couche à base d'oxyde d'étain comprend aussi de préférence de l'oxyde de zinc. La combinaison de ces deux oxydes offre l'avantage, en plus d'un taux de dépôt élevé par les techniques de pulvérisation cathodique, de conduire à des couches dont la structure est bien stable dans les traitements thermiques considérés.

L'oxyde de zinc seul n'est pas souhaitable comme couche faisant obstacle à la diffusion en raison de sa tendance à constituer des structures colonnaires, en particulier lorsque son épaisseur dépasse une dizaine de nanomètres, structures qui n'offrent pas un obstacle convenable à la diffusion.

La combinaison des oxydes de zinc et d'étain prévient la formation de structures colonnaires pour autant que la teneur en oxyde d'étain reste suffisante.

La présence d'une couche faisant obstacle à la diffusion des constituants du verre modifie les propriétés optiques du vitrage. En particulier la présence d'une couche à base d'oxyde d'étain, dont l'indice de réfraction est inférieur à celui de la couche réfléchissante selon l'invention, modifie la réflexion de l'ensemble.

Pour ne pas réduire de manière excessive la réflexion du vitrage il est préférable de faire en sorte, lorsqu'une couche à base d'oxyde d'étain est utilisée, de bien adapter son épaisseur. Celle-ci est de préférence inférieure à 1,2 fois l'épaisseur de la couche ou système de couches réfléchissant selon l'invention.

Les couches ou systèmes de couches utilisés selon l'invention doivent encore conduire à des vitrages dont la coloration induite par ces couches répond à la demande du marché. Certaines colorations notamment en réflexion doivent être écartées. C'est le cas en particulier des colorations globalement "pourpres". Avantageusement selon l'invention les colorations analysées dans le système du CIE (Comité International de l'Eclairage) présentent les paramètres a* et b* répondant aux conditions suivantes pour un illuminant D et pour un angle solide de 10° au plus : a*≤0 et b*≤6.

Il est particulièrement important d'avoir systématiquement a* non positif. Pour les valeurs négatives de a* la coloration est soit légèrement bleue soit légèrement verte. Ces colorations en réflexion sont acceptables même si la préférence est la neutralité de coloration.

Il est aussi préférable, dans le cas d'un traitement thermique, que celui-ci n'entraine pas une modification significative de la coloration en réflexion. Lorsque les produits offrent substantiellement les mêmes colorations il est possible d'utiliser dans un même ensemble des produits par exemple bombés et d'autres qui ne le sont pas, sans différence d'aspect. Les produits sont juxtaposables sans nuire à l'esthétique.

En pratique plus les produits sont "neutres" plus leur coloration, avant et après traitement thermique, permet leur juxtaposition.

Dans la pratique des vitrages répondant à ces exigences de coloration présentent de préférence, avant et après traitement thermique, des variations de a* et b* telles que $\Delta E^* \leq 2$ et avantageusement $\Delta E^* \leq 1$, avec :

$$\Delta E^* = (\Delta a^{*2} + \Delta b^{*2})^{\frac{1}{2}}$$

En dehors des couches qui déterminent les caractéristiques optiques des vitrages selon l'invention, et dans le but de protéger encore plus ces couches contre les risques de détérioration dans les opérations ultérieures notamment de stockage et de transport, il est possible et avantageux de recouvrir ces couches par un revêtement temporaire qui est éliminé avant la pose de ces vitrages.

Il est connu de recouvrir les vitrages de pellicules de cires ou polymères divers solubles qui peuvent être éliminés par lavage. Ces produits peuvent être utilisés pour protéger les couches mises en œuvre selon l'invention.

L'utilisation de ces produits de protection nécessite deux opérations supplémentaires sur les vitrages, l'application d'une part et le lavage ultérieur d'autre part. Dans le cas des vitrages devant subir un traitement thermique, il est préférable d'utiliser un revêtement de carbone, lequel peut être intégré dans les opérations de dépôt par pulvérisation cathodique, et dont l'élimination s'opère d'elle-même lors du traitement thermique par combustion au contact de l'air.

Les vitrages selon l'invention sont constitués à partir de feuilles de verre de différentes épaisseurs. Ils peuvent aussi être constitués de feuilles de verre clair ou coloré dans la masse, principalement pour leur conférer des caractéristiques esthétiques, mais aussi éventuellement pour aménager leurs propriétés opto-énergétiques.

Il est possible d'utiliser des verres plus absorbants que les verres clairs, notamment des verres gris ou des verres à dominante légèrement bleue ou verte. De façon préférée lorsque des verres colorés sont utilisés, la longueur d'onde dominante en réflexion $\lambda$ m, pour un illuminant D65 dans un angle solide de 2°, est comprise entre 475 et 600nm.

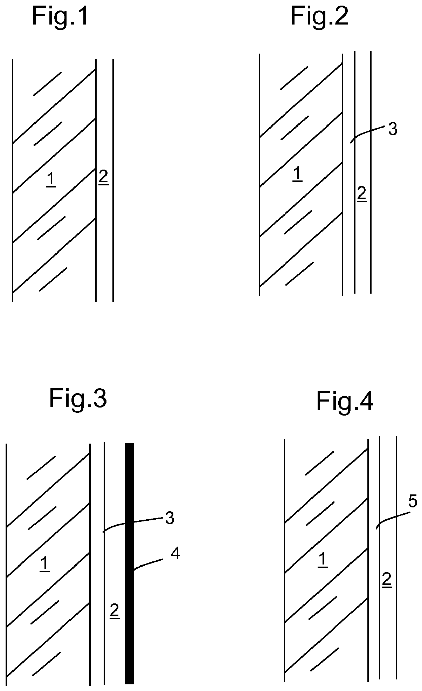

L'invention est décrite de manière détaillée dans la suite par des exemples de mise en œuvre de l'invention, le cas échéant en faisant référence aux dessins annexés dans lesquels les figures 1 à 4 sont des représentations schématiques de vitrages selon l'invention.

La figure 1 montre un vitrage 1 comportant une couche réfléchissante 2 selon l'invention. Les épaisseurs respectives ne sont pas respectées par mesure de clarté.

La figure 2 est un vitrage selon l'invention qui, en plus de la couche réfléchissante 2, comporte une couche 3 dont le rôle est de faire obstacle à la diffusion de constituants de la feuille de verre 1. Cette couche est avantageusement constituée à base d'oxyde d'étain, de préférence en combinaison avec de l'oxyde de zinc. Il peut s'agir aussi de couches de d'oxyde, de nitrure ou d'oxynitrure de silicium.

La figure 3 représente un vitrage selon l'invention qui, en plus des couches précédentes, comporte un revêtement de protection 4. Le revêtement en question qui est appliqué à titre temporaire, a pour rôle essentiel de prévenir les rayures griffures et autres altérations mécaniques susceptibles d'atteindre les couches fonctionnelles 3. Cette couche, dans le cas des vitrages subissant un traitement thermique postérieur à la formation des couches fonctionnelles, est avantageusement constituée d'un matériau qui s'élimine par combustion au cours de ce traitement thermique. Une couche de carbone est particulièrement avantageuse pour constituer ce revêtement.

La figure 4 présente un vitrage comportant deux couches réfléchissantes superposées. La couche supplémentaire 5 est avantageusement d'un indice de réfraction supérieur à celui de la couche réfléchissante 2 afin d'accroître la réflexion.

Les produits selon l'invention sont analysés notamment pour leurs qualités de résistance mécanique et/ou chimique. Les épreuves auxquelles ils sont soumis sont les mêmes que celles qui sont utilisées pour l'évaluation des vitrages analogues dont les couches fonctionnelles sont produites par pyrolyse. Les vitrages selon l'invention doivent atteindre des performances équivalentes.

Les essais comportent systématiquement des épreuves de résistance à l'humidité (21 jours en chambre climatique), des épreuves de résistance chimique (brouillard salin neutre de 21 jours et exposition au $SO_2$ cinq cycles), une épreuve de résistance à l'abrasion (AWRT pour Automatic Web Rub Test) et aux griffes (DBT pour Dry Brush Test). Les épreuves de résistance chimique sont celles décrites dans la norme EN 1096-2. Les tests d'abrasion sont spécifiques aux essais des couches déposées par "magnetron sputtering". Ces deux tests sont sensiblement plus "sévères" que les tests analogues décrits dans la norme indiquée ci-dessus. Autrement dit, les épreuves d'abrasion réussies dans les exemples réalisés, sont nécessairement satisfaites dans les conditions de cette norme.

L'épreuve en chambre climatique consiste à exposer l'échantillon dans une étuve maintenue à 40±1,5°C pendant 21 jours. L'épreuve est réussie lorsque l'échantillon demeure exempt de taches. Le vieillissement dans ces conditions pour chaque jour correspond à une exposition d'un an aux aléas atmosphériques usuels.

L'échantillon ne doit pas être décoloré, ni de façon générale supporter des défauts de quelque nature que ce soit, comme le décollement de la couche.

L'essai de résistance à l'atmosphère acide est conduit de la façon suivante :

L'échantillon est placé dans une enceinte chargée d'atmosphère acide (deux litres d'eau pour 2 litres de $SO_2$) portée à 40°C pendant 8 heures. Ramené à la température ambiante, l'échantillon demeure encore 16 heures dans l'atmosphère en question. Le même cycle est répété 4 fois. La couche ne doit pas se détacher.

Le test de frottement humide "AWRT" (automatic wet rub test) est effectué avec une tête circulaire de téflon revêtue d'un tissu de coton (ADSOL ref. 40700004). Celle-ci est déplacée sous charge de 1050g sur la couche. Le coton est maintenu humide pendant toute l'épreuve avec de l'eau déminéralisée. La fréquence des oscillations est de 60 à 90 par minute. Les échantillons sont observés pour détecter les altérations de la couche.

L'épreuve de la brosse sèche "DBT" (dry brush test) est effectué sur un appareil Erichsen (modèle 494) équipé d'une brosse normalisée (ASTM D2486). Chaque fibre de la brosse a un diamètre de 0,3mm. Les fibres sont regroupées en faisceau de 4mm de diamètre. Le poids total appliqué par la brosse et son support est 454g. L'épreuve comprend 1000 cycles de va et vient.

Les mesures des grandeurs optiques sont faites selon la norme EN410.

Les échantillons sont réalisés sur des feuilles de verre "float" clair d'épaisseur 4mm.

Exemples de référence 1 et 1'.

On dépose une couche d'oxyde de zirconium de 500Å d'épaisseur.

Les essais de résistance chimique et mécanique sont satisfaisants. Les propriétés optiques de l'échantillon sont en transmission, réflexion côté verre côté verre (sous 2°) et pour les données colorimétriques (illuminant D65 sous 10°) en transmission et en réflexion :

| TL | Rg | a* trans. | b* trans. | a* ref. | b* ref. |
|------|------|-----------|-----------|---------|---------|
| 71,1 | 24,3 | 0,1 | 2,2 | - 1,9 | -3,7 |

Après traitement thermique à 670°C pendant 8 minutes 30 les propriétés de cet échantillon deviennent :

| TL | R | a* trans. | b* trans. | a* ref. | b* ref. | $\Delta$E*ref. |
|------|------|-----------|-----------|---------|---------|---------|
| 73,6 | 24,3 | 0,1 | 2,0 | - 1,9 | -3,8 | 0,1 |

Exemples de référence 2, 3, 4 et 5 et 2', 3', 4', 5'.

Les échantillons comportent une couche d'oxyde de tantale comme couche réfléchissante et une sous couche d'oxyde d'étain. Les épaisseurs respectives de ces couches sont en Å:

| exemple | 2 | 3 | 4 | 5 |
|---------|-----|-----|-----|-----|
| SnO$_2$ | 100 | 300 | 300 | 170 |
| TaO | 200 | 500 | 200 | 380 |

Les essais de résistance chimique et mécanique sont satisfaisants. Les propriétés optiques des échantillons sont en transmission, réflexion côté couche (sous 2°) et pour les données colorimétriques (illuminant D65 sous 10°) en transmission et en réflexion, avant traitement thermique et après ce traitement :

| | TL | Rc | a* trans. | b* trans. | a* ref. | b* ref. | $\Delta$E*ref. |
|----------|------|------|-----------|-----------|---------|---------|---------|
| avant 2 | 81,1 | 16,6 | -0,8 | 3,6 | -1,3 | 7,7 | |
| après 2' | 82,2 | 15,6 | -0,8 | 2,9 | 1,3 | -6,9 | 0,8 |
| avant 3 | 72,9 | 24,6 | -0,4 | -3,0 | -2,0 | 9,8 | |
| après 3' | 76,5 | 21,1 | -0,7 | -3,5 | -1,0 | 10 | 1,0 |
| avant 4 | 74,3 | 23,3 | -0,4 | 4,0 | -2,1 | -5,4 | |
| après 4' | 76,1 | 21,5 | -0,4 | 2,8 | -1,8 | -5,1 | 0,5 |
| avant 5 | 72,9 | 24,7 | -0,2 | 2,8 | -2,2 | -3,5 | |
| après 5' | 74,1 | 23,5 | -0,2 | 2,3 | -1,9 | -3,7 | 0,3 |

Exemples de référence 6, 7 et 6', 7'.

Les systèmes de couches sont constitués d'une couche réfléchissante d'oxyde de zirconium et d'une sous couche d'oxyde d'étain. La composition des couches est en Å:

| exemple | 6 | 7 |
|---|---|---|
| $SnO_2$ | 100 | 250 |
| $ZrO_2$ | 500 | 250 |

|  | TL | Rg | a* trans. | b* trans. | a* ref. | b* ref. | $\Delta$E*ref. |
|---|---|---|---|---|---|---|---|
| avant 6 | 71,8 | 26,1 | 0,2 | 0,9 | -2,1 | -1,0 | |
| après 6' | 72,7 | 25,3 | 0,2 | 1,1 | -1,9 | -2,0 | 1,0 |
| avant 7 | 73,8 | 24,1 | 0,0 | 3,7 | -2,1 | -5,4 | |
| après 7' | 75,5 | 22,5 | 0,0 | 2,9 | -1,8 | -5,7 | 0,5 |

Exemples de référence 8, 8' et 9, 9'.

Pour ces exemples la couche réfléchissante est soit à base d'oxyde de niobium (8 et 8') soit d'oxyde mixte de niobium et de tantale (Nb/Ta environ 1/1) (9 et 9'). L'épaisseur de la couche est 200Å. Sous la couche réfléchissante est disposée une couche de 300Å d'oxyde d'étain.
Ces ensembles sont résistants mécaniquement et chimiquement. Leurs propriétés optiques, comme pour les exemples précédents, sont reportées dans le tableau suivant. La réflexion est observée côté couche.

|  | TL | Rc | a* trans. | b* trans. | a* ref. | b* ref. | $\Delta$E*ref. |
|---|---|---|---|---|---|---|---|
| avant 8 | 72,5 | 25,0 | -03 | 4,5 | -2,1 | -6,0 | |
| après 8' | 73,7 | 23,6 | -0,3 | 3,3 | -1,8 | -5,5 | 0,6 |
| avant 9 | 73,0 | 24,5 | -0,3 | 3,9 | -2,2 | -5,1 | |
| après 9' | 72,9 | 24,6 | -0,2 | 2,8 | -1,9 | -4,5 | 0,7 |

Exemples de référence 10 à 12 et 10' à 12', et Exemples 13 et 13'

Pour ces exemples les couches font un ensemble dont les 10, 11 et 13 comprennent trois éléments. Partant du support de verre dans tous les cas une première couche est destinée à prévenir la diffusion à partir du verre des ions les plus mobiles tels que le sodium. Il s'agit soit d'une couche d'oxyde d'étain, soit de nitrure de silicium. La couche réfléchissante unique ($ZrO_2$) ou double ($TiO_2$ et $ZrO_2$) présente un fort indice de réfraction.
Les exemples 13 et 13' selon l'invention présentent une couche superficielle d'oxyde mixte de titane et de zirconium (rapport pondéral 50 et 46%). Cette couche est relativement mince et, seule, ne suffirait pas pour offrir une réflexion suffisante, laquelle résulte de la présence d'une couche épaisse d'oxyde de zirconium.
Les couches de chaque exemple sont les suivantes et leur épaisseur est en Å :

| exemple | 10 | 11 | 12 | 13 |
|---|---|---|---|---|
| $SnO_2$ | 150 | | | 150 |
| $Si_3N_4$ | | 150 | 150 | |
| $TiO_2$ | 100 | | 100 | |
| $ZrO_2$ | 400 | 430 | 300 | 430 |
| TZO | | | | 50 |

Les propriétés optiques de ces ensembles sont reportées au tableau suivant. Comme précédemment les couches sont testées avant et après traitement thermique. Les réflexions sont mesurées côté verre.

|  | TL | Rv | a* trans. | b* trans. | a* ref. | b* ref. | ∆E*ref. |
|---|---|---|---|---|---|---|---|
| avant 10 | 68,9 | 28,3 | 0,4 | -0,6 | -2,9 | 2,1 | |
| après 10' | 68,4 | 28,7 | 0,4 | -0,3 | -2,8 | 0,8 | 1,3 |
| avant 11 | 72,2 | 25,1 | 0,2 | 1,4 | -2,6 | -2,0 | |
| après 11' | 73,6 | 24,0 | 0,1 | 1,6 | -2,5 | -2,9 | 0,9 |
| avant 12 | 70,2 | 27,1 | 0,3 | 2,9 | -2,6 | -4,2 | |
| après 12' | 72,2 | 25,0 | 0,1 | 3,2 | -2,5 | -2,4 | 1,2 |
| avant 13 | 71,2 | 26,1 | 0,2 | 0,5 | -2,7 | -0,1 | |
| après 13' | 71,6 | 25,9 | 0,3 | 1,0 | -2,6 | -1,5 | 1,4 |

## Revendications

1. Vitrage transparent comprenant au moins une couche réfléchissante déposée par pulvérisation cathodique sous vide, couche composée à base d'un ou plusieurs oxydes d'un des métaux comprenant Ta, Nb, Zr ou des oxydes mixtes de ces métaux, couche couverte par une couche supplémentaire de protection à base d'un oxyde mixte de titane et d'un des métaux comprenant Ta, Nb, Zr d'au plus 100Å d'épaisseur, l'épaisseur de la couche en question et éventuellement d'autres couches d'indice de réfraction supérieur à 2,2 présentes dans l'assemblage, étant choisie de sorte que sur une feuille de verre « float » clair de 4mm d'épaisseur, cette ou ces couches conduiraient à une réflexion d'au moins 20% et une transmission lumineuse d'au moins 60%, épaisseur qui est comprise entre 200 et 700Å, et comprenant, disposée entre la feuille de verre et la couche ou système de couches réfléchissante(s), au moins une couche à base d'oxyde d'étain, la couche ou système de couches en question présentant par ailleurs une résistance mécanique et/ou chimique comparable à celles des couches produites par pyrolyse pour l'obtention des produits présentant le même type de propriétés optiques.

2. Vitrage selon la revendication 1 dans lequel la couche réfléchissante est une couche d'oxyde de niobium.

3. Vitrage selon la revendication 1 dans lequel la couche réfléchissante est une couche d'un oxyde mixte de niobium et de zirconium.

4. Vitrage selon la revendication 3 dans lequel la couche d'oxyde mixte est constitué sensiblement dans un rapport atomique Zr/Nb de 25 à 75%.

5. Vitrage selon la revendication précédente dans lequel la couche ou système de couches réfléchissante(s)s sont telles qu'appliquées sur une feuille de verre « float » clair de 4mm d'épaisseur, l'absorption de cette feuille revêtue serait inférieure à 20% de la lumière incidente et de préférence inférieure à 10%.

6. Vitrage selon l'une des revendications précédentes dans lequel la couche ou le système de couches satisfait aux tests de résistance à la condensation, au brouillard salin et au test d'acidité tels que définis dans la norme EN 1096-2.

7. Vitrage selon l'une des revendications précédentes dans lequel la couleur en réflexion dans le système CIE est telle que sous illuminant D et dans l'angle solide de 10° par rapport à la normale au vitrage, a*≤0 et b*≤6.

8. Vitrage selon l'une des revendications précédentes, pour lequel, lorsqu'il est soumis à un traitement thermique d'au moins 550°C et pendant 5 minutes, le voile mesuré ne dépasse pas 2 et de préférence 1%.

9. Vitrage selon l'une des revendications précédentes comprenant outre la couche réfléchissante composée à base d'oxydes de niobium de tantale de zirconium ou d'un oxyde mixte de deux ou plus de ces métaux, et située entre cette couche et la feuille de verre, au moins une couche d'oxyde présentant un indice de réfraction supérieur à celui de ladite couche réfléchissante.

**10.** Vitrage selon la revendication précédente dans lequel la couche à indice de réfraction supérieur est une couche d'oxyde de titane éventuellement légèrement sous-stoechiométrique ou une couche d'oxy-nitrure de titane à faible taux d'azote (rapport atomique N/O inférieur à 10%).

**11.** Vitrage selon la revendication précédente dans lequel la couche à base d'oxyde d'étain comprend au moins 30% et de préférence au moins 40% en poids d'oxyde d'étain le restant étant constitué essentiellement d'oxyde de zinc.

**12.** Vitrage selon la revendication précédente dans lequel la couche à base d'oxyde d'étain présente une épaisseur qui n'est pas supérieure à 1,2 fois l'épaisseur de la couche ou système de couches réfléchissante(s).

**13.** Vitrage selon l'une des revendications précédentes dans lequel la couche ou système de couches réfléchissantes est (sont) recouverte(s) d'une couche de protection contre l'abrasion, couche composée de carbone déposé par pulvérisation cathodique, soit d'une couche polymère.

**14.** Vitrage selon la revendication précédente lequel est soumis à traitement thermique de type bombage/trempe conduisant à l'élimination de la couche protectrice.

**15.** Vitrage selon l'une des revendications précédentes dans lequel la feuille de verre revêtue est une feuille colorée dans la masse, le verre présentant en réflexion une longueur d'onde dominante $\lambda_m$ sous illuminant D65 et 2° d'angle solide, comprise entre 475 et 600nm.


**Patentansprüche**

**1.** Transparente Verglasung, umfassend mindestens eine durch Kathodenzerstäubung unter Vakuum abgeschiedene reflektierende Schicht, wobei die Schicht auf der Basis eines oder mehrerer Oxide eines der Ta, Nb, Zr umfassenden Metalle oder von Mischoxiden dieser Metalle hergestellt ist, wobei die Schicht mit einer zusätzlichen Schutzschicht auf der Basis eines Mischoxids von Titan und eines der Ta, Nb, Zr umfassenden Metalle mit einer Dicke von höchstens 100 Å bedeckt ist, wobei die Dicke der Schicht und gegebenenfalls anderer in der Anordnung vorhandener Schichten mit einem Brechungsindex von mehr als 2,2 derart gewählt wird, dass auf einer klaren "Float"-Glasfolie mit einer Dicke von 4 mm diese Schicht bzw. Schichten zu einer Reflexion von mindestens 20 % und einer Lichttransmission von mindestens 60 % führen, wobei die Dicke zwischen 200 und 700 Å beträgt, und umfassend, eingebracht zwischen die Glasfolie und die reflektierende Schicht bzw. das System reflektierender Schichten, mindestens eine Schicht auf der Basis von Zinnoxid, wobei die Schicht bzw. das Schichtsystem außerdem eine mechanische und/oder chemische Beständigkeit aufweist, die mit denjenigen von durch Pyrolyse hergestellten Schichten vergleichbar ist, um Produkte zu erhalten, die denselben Typ optischer Eigenschaften aufweisen.

**2.** Verglasung nach Anspruch 1, wobei es sich bei der reflektierenden Schicht um eine Schicht aus Nioboxid handelt.

**3.** Verglasung nach Anspruch 1, wobei es sich bei der reflektierenden Schicht um eine Schicht aus einem Niobund Zirkon-Mischoxid handelt.

**4.** Verglasung nach Anspruch 3, wobei die Mischoxidschicht im Wesentlichen in einem Zr/Nb-Atomverhältnis von 25 bis 75 % hergestellt wird.

**5.** Verglasung nach dem vorhergehenden Anspruch, wobei die reflektierende Schicht bzw. das System reflektierender Schichten derart ist, dass nach Aufbringen auf eine klare "Float"-Glasfolie mit einer Dicke von 4 mm die Absorption dieser beschichteten Folie weniger als 20 % des einfallenden Lichts und vorzugsweise weniger als 10 % beträgt.

**6.** Verglasung nach einem der vorhergehenden Ansprüche, wobei die Schicht bzw. das Schichtsystem Prüfungen der Kondensations-, Salznebelbeständigkeit und die Säureprüfung gemäß der Norm EN 1096-2 erfüllt.

**7.** Verglasung nach einem der vorhergehenden Ansprüche, wobei die Farbe unter Reflexion im CIE-System derart ist, dass unter dem Leuchtmittel D und unter einem Raumwinkel von 10° in Bezug auf die Normale zur Verglasung a*≤0 und b*≤6.

**8.** Verglasung nach einem der vorhergehenden Ansprüche, wobei, wenn sie einer Wärmebehandlung bei mindestens 550 °C Verglasung und während 5 Minuten unterzogen wird, der gemessene Schleier 2 % und vorzugsweise 1 % nicht überschreitet.

9. Verglasung nach einem der vorhergehenden Ansprüche, die außer der auf der Basis von Niob, Tantal-, Zirkonoxid oder einem Mischoxid von zwei oder mehr dieser Metalle hergestellten reflektierenden Schicht und eingebracht zwischen diese Schicht und die Glasfolie mindestens eine Oxidschicht mit einem Brechungsindex, der höher als derjenige der reflektierenden Schicht ist, umfasst.

10. Verglasung nach dem vorhergehenden Anspruch, wobei es sich bei der Schicht mit höherem Brechungsindex um eine Schicht aus gegebenenfalls leicht substöchiometrischem Titanoxid oder eine Titanoxinitridschicht mit niedrigem Stickstoffanteil (N/O-Atomverhältnis unter 10 %) handelt.

11. Verglasung nach dem vorhergehenden Anspruch, wobei die Schicht auf der Basis von Zinnoxid mindestens 30 Gew.-% und vorzugsweise mindestens 40 Gew.-% Zinnoxid umfasst, wobei der Rest im Wesentlichen aus Zinkoxid besteht.

12. Verglasung nach dem vorhergehenden Anspruch, wobei die Schicht auf der Basis von Zinnoxid eine Dicke aufweist, die nicht mehr als das 1,2-Fache der Dicke der reflektierenden Schicht bzw. des Systems reflektierender Schichten beträgt.

13. Verglasung nach einem der vorhergehenden Ansprüche, wobei die reflektierende Schicht bzw. das System reflektierender Schichten mit einer Schutzschicht vor Abrieb, wobei diese Schicht aus durch Kathodenzerstäubung abgeschiedenem Kohlenstoff besteht, oder einer Polymerschicht beschichtet ist bzw. sind.

14. Verglasung nach dem vorhergehenden Anspruch, die einer Wärmebehandlung des Biege-/Vorspannungstyps unterzogen wird, die zur Entfernung der Schutzschicht führt.

15. Verglasung nach einem der vorhergehenden Ansprüche, wobei es sich bei der beschichteten Glasfolie um eine in der Masse durchgefärbte Folie handelt, wobei das Glas unter Reflexion eine dominante Wellenlänge $\lambda_m$ unter dem Leuchtmittel D65 und 2° Raumwinkel zwischen 475 und 600 nm aufweist.

**Claims**

1. Transparent glazing comprising at least one reflective layer deposited by vacuum cathode sputtering, layer composed on the basis of one or more oxides of one of the metals comprising Ta, Nb, Zr or mixed oxides of these metals, layer covered by an additional protective layer based on a mixed oxide of titanium and of one of the metals comprising Ta, Nb, Zr having a thickness of at most 100 Å, the thickness of the layer in question and any other layers having a refractive index of greater than 2.2 which are present in the assembly being chosen so that, on a clear float glass sheet having a thickness of 4 mm, this or these layer (s) would result in a reflection of at least 20% and a light transmission of at least 60%, which thickness is between 200 Å and 700 Å, and comprising, positioned between the glass sheet and the reflective layer or system of reflective layers, at least one layer based on tin oxide, the layer or system of layers in question furthermore having a mechanical and/or chemical resistance comparable to those of layers produced by pyrolysis for obtaining products having the same type of optical properties.

2. Glazing according to Claim 1, in which the reflective layer is a layer of niobium oxide.

3. Glazing according to Claim 1, in which the reflective layer is a layer of a mixed niobium zirconium oxide.

4. Glazing according to Claim 3, in which the layer of mixed oxide is formed substantially in a Zr/Nb atomic ratio of 25% to 75%.

5. Glazing according to the preceding claim, in which the reflective layer or system of reflective layers are such that, applied to a clear float glass sheet having a thickness of 4 mm, the absorption of this coated sheet would be less than 20% of the incident light and preferably less than 10%.

6. Glazing according to one of the preceding claims, in which the layer or system of layers satisfies the tests of resistance to condensation, to salt spray and the acidity test as defined in the standard EN 1096-2.

7. Glazing according to one of the preceding claims, in which the colour in reflection in the CIE system is such that under illuminant D and under the solid angle of 10° relative to the normal to the glazing, $a^* \leq 0$ and $b^* \leq 6$.

8. Glazing according to one of the preceding claims, for which, when it is subjected to a heat treatment of at least 550°C and for 5 minutes, the haze measured does not exceed 2% and preferably 1%.

9. Glazing according to one of the preceding claims, comprising, in addition to the reflective layer composed on the basis of oxides of niobium, tantalum or zirconium or of a mixed oxide of two or more of these metals, and situated between this layer and the glass sheet, at least one layer of oxide having a refractive index greater than that of said reflective layer.

10. Glazing according to the preceding claim, in which the layer having a greater refractive index is a layer of optionally slightly substoichiometric titanium oxide or a layer of titanium oxynitride with a low nitrogen content (N/O atomic ratio of less than 10%) .

11. Glazing according to the preceding claim, in which the layer based on tin oxide comprises at least 30% and preferably at least 40% by weight of tin oxide, the remainder being essentially formed of zinc oxide.

12. Glazing according to the preceding claim, in which the layer based on tin oxide has a thickness which is no greater than 1.2 times the thickness of the reflective layer or system of reflective layers.

13. Glazing according to one of the preceding claims, in which the reflective layer or system of reflective layers is (are) covered with a layer for protection against abrasion, layer composed of carbon deposited by cathode sputtering, or with a polymer layer.

14. Glazing according to the preceding claim, which is subjected to heat treatment of bending/tempering type leading to the removal of the protective layer.

15. Glazing according to one of the preceding claims, in which the coated glass sheet is a sheet that is coloured in the bulk, the glass having in reflection a dominant wavelength $\lambda_m$ under illuminant D65 and a 2° solid angle between 475 and 600 nm.

## Fig.1

## Fig.2

## Fig.3

## Fig.4

**EP 2 545 011 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20060159933 A